(19) Europäisches Patentamt
European Patent Office
Office européen des brevets

(11) **EP 3 480 782 A1**

(12) **EUROPEAN PATENT APPLICATION**

(43) Date of publication:
**08.05.2019 Bulletin 2019/19**

(51) Int Cl.:
*G06T 5/00* [(2006.01)]     *G06K 9/62* [(2006.01)]

(21) Application number: **17199625.9**

(22) Date of filing: **02.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Vrije Universiteit Brussel**
  **1050 Brussel (BE)**
• **Université Libre de Bruxelles**
  **B-1050 Bruxelles (BE)**

(72) Inventors:
• **Bolsée, Quentin**
  **B-1180 Uccle (BE)**
• **Munteanu, Adrian**
  **B-1170 Brussels (BE)**
• **Lafruit, Gauthier**
  **B-1200 Woluwé-St-Lambert (BE)**

(74) Representative: **Pronovem**
**Office Van Malderen**
**Avenue Josse Goffin 158**
**1082 Bruxelles (BE)**

(54) **METHOD AND DEVICE FOR REDUCING NOISE IN A DEPTH IMAGE**

(57)     A method and device for denoising depth images comprises providing a noise model introducing noise to an input (13) and representing at least one three-dimensional (3D) environment with a computer graphics simulator (11). A first dataset of noiseless depth images from the represented at least one 3D environment is produced (12). The first dataset is applied as input to the noise model and the noise model producing a second dataset of noisy depth images from the first dataset (13). The first dataset and the second dataset are applied to a first machine learning system to adapt one or more filters of the first machine learning system (14).

FIG 1

**Description**

**Technical field**

The present invention is related to methods of noise reduction in depth images, i.e., images comprising distance information.

**Background art**

Time-of-Flight (ToF) sensors are becoming increasingly popular in numerous professional and consumer applications as means to acquire depth information about the environment. Such cameras have witnessed a growing interest in the past years thanks to their real-time capabilities, relatively low cost and technology push from important market players. However, due to their large measurement errors, it is almost impossible to use a raw ToF acquisition without substantial post-processing: each pixel is corrupted with a large amount of noise, making it very difficult to recognize small objects and smooth surfaces. Traditional image processing methods are currently used to post-process ToF images and remove noise. In particular, Bilateral Filtering can be used when depth noise is modelled as additive white Gaussian.

It is known from US 2016/0321523 to use machine learning to adapt parameters of a filter which removes noise from images. A neural network is used for the machine learning and is input with noisy images rendered with only a few samples. The neural network is trained on the noisy images to adapt the parameters of a filter in order to obtain a noise-free image that is similar to the ground truth image rendered with many samples.

One drawback with the above method is that it is nearly impossible to actually capture enough real data of noisy images and related ground truth images for training the neural network. As a result, the training method may be labour intensive, or the filter parameters output from the neural network may not be optimal.

**Summary of the invention**

One object of the present disclosure is to provide a method allowing to obtain a noise reduction filter which is more effective and/or more accurate than prior art noise reduction filters. Another object is to provide an easier and less labour intensive method allowing to obtain such reliable filters.

It has been observed by the inventors that one reason for the lack of accuracy of prior art noise reduction filters, is that they are not able to capture the non-stationary nature of the noise pattern encountered in real depth imaging.

According to a first aspect of the invention, there is therefore provided a method as set out in the appended claims. In one aspect of the method, a noise model is set up. The noise model advantageously allows for capturing a non-stationary nature of the noise pattern, as can often be encountered in real depth imaging. The noise model is configured to add noise to an input dataset, in particular non-stationary noise, such as non-stationary bivariate Gaussian noise.

In order to obtain a very large dataset, use is made of a computer graphics simulator. At least one three-dimensional (3D) environment is represented with a computer graphics simulator, and a first dataset of noiseless (i.e., ground truth) depth images is produced from the represented at least one 3D environment. Advantageously, with one and the same 3D environment, multiple depth images can be produced easily and without great effort.

From each noiseless depth image, a depth frame (depth data) and advantageously also a confidence frame (confidence or infrared data) is determined. The confidence frame can be determined based on simulating propagation of one or more physical parameters in the 3D environment. The first dataset, which may comprise only the depth frames associated with the depth images, or both the depth frames and the confidence frames, is then applied as input to the noise model thereby producing a second dataset of noisy depth images from the first dataset. The noise model may be configured to produce noisy depth frames only, or both noisy depth frames and noisy confidence frames as second dataset.

Advantageously, the noise model may be configured to model noise in a complex plane. To this end, values of the depth frames and optionally values of the confidence frames are mapped to complex number. Each set of corresponding values is advantageously mapped to a single complex number. Noise may be added to the complex number to obtain a noisy complex number. The noisy complex number may be converted back to a value of the depth frame of the second dataset (noisy depth), and optionally a value of the confidence frame of the second dataset (noisy confidence). Advantageously noise can be modelled through a pseudo-random generator, which can be run several times in order to apply distinct independent noise values to corresponding depth or confidence values in different depth frames.

The first dataset and the second dataset are applied to a first machine learning system to adapt one or more filters of the first machine learning system. The first machine learning system is advantageously a deep learning system, in particular a deep neural network. It may be a convolutional neural network. Advantageously, the depth frames of the first dataset without the confidence frames are applied to the machine learning system. Advantageously, the depth frames and possibly also the confidence frames of the second dataset are applied to the first machine learning system.

On the basis of the first dataset, and the second dataset, the machine learning system will adapt one or more filters relating to denoising depth information.

Once trained, the first machine learning system may then be used for denoising real depth images, such as images taken with a depth acquisition device. Alternatively, the one or more filters adapted by the first machine learning system following training, may be implemented in a second machine learning system to denoise real depth images.

According to a second aspect of the invention, there is provided a depth acquisition device as set out in the appended claims. The depth acquisition device is implemented with a noise reduction filter obtained by methods according to the first aspect.

## Brief description of the figures

Aspects of the invention will now be described in more detail with reference to the appended drawings, wherein same reference numerals illustrate same features and wherein:

Figure 1 represents a flow diagram of an example method according to aspects of the present invention;
Figure 2 represents an example embodiment of a convolutional neural network architecture implementing methods for depth denoising as described herein;
Figures 3a-c represent a training dataset entry with depth values indicated in mm. Fig. 3a represents a patch of a noisy depth frame; Fig. 3b represents a patch of the noiseless depth frame; Fig. 3c represents a patch of the noisy confidence frame; Fig. 3d represents the mask that is applied for determining the weighted mean square error during training;
Figure 4 represents *PSNR* improvement during training. The *PSNR* improvement is plotted against the number of batches;
Figures 5a-c represent depth values of a validation set of three scenes not part of a training dataset, with values expressed in mm;
Figures 6a-b represent validation scene 1 (Fig. 5a) respectively before and after processing by a convolutional neural network, viewed as a point cloud. Fig. 6a represents the noisy input, and Fig. 6b represents the denoised input.

## Description of embodiments

In the present description, methods are provided of obtaining noise reduction filters which are effective in removing or reducing noise in depth information captured by a depth acquisition device.

In the context of the present description, a depth image may refer to any dataset comprising depth information. Depth information may refer to information representative of a distance in an environment, e.g. as captured by a depth acquisition device such as though not limited to ToF sensors. Other suitable depth acquisition devices are structured light devices, photogrammetry, LiDAR, sonar.

According to an aspect of the present invention, a noise reduction filter is obtained by training a machine learning system, such as though not limited to a neural network, in particular a convolutional neural network. The machine learning system is trained to adapt the filter, e.g. adapt filter parameters, by inputting both noisy depth information (noisy depth images) and corresponding ground truth information (noiseless depth images) to the machine learning system.

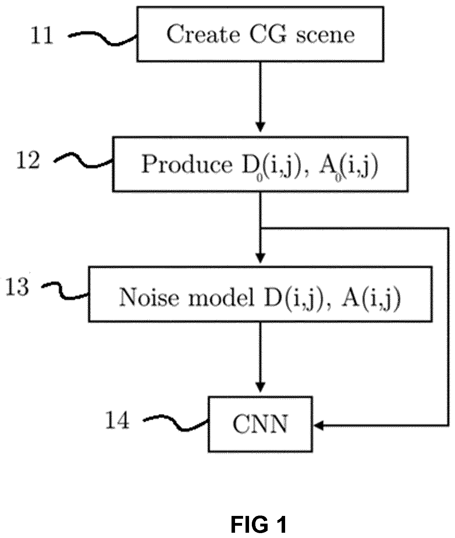

In one aspect, referring to Fig. 1, the method allows for easily obtaining a very large dataset of noisy and corresponding noiseless images for inputting to the machine learning system in step 11. To this end, use is made of a computer graphics scene simulator to create at least one (but advantageously more than one) three-dimensional (3D) environment in computer graphics. A plurality of scenes are taken/rendered from the 3D environment to create a set of images. The scenes may refer to images of the 3D environment taken from different viewing angles, or images of particular details of the 3D environment, etc. As a result, by just creating one or a few 3D environments, one is able to produce a large dataset of images with limited effort. Additionally, by computer graphics, any environment can be easily created that would be very similar to the environments in which the eventual depth acquisition device will be used, so that more effective noise reduction filters may be obtained. Specific examples of computer graphics simulators that can be used for creating the 3D environment are: Blender, Maya® (Autodesk), 3ds Max® (Autodesk), and Cinema4D (Maxon).

The image dataset resulting from the 3D environment is composed of noiseless images. From the noiseless images depth information is extracted to produce a depth frame $D_0(i,j)$ of the image in step 12. In addition, infrared or confidence information is advantageously extracted from or determined on the basis of the noiseless images to produce a confidence frame $A_0(i,j)$. The confidence frame can be an indication of the amplitude of the signal (e.g., meaning light in a particular wavelength or sound) reflected by the 3D scene back to the sensor. Confidence information can e.g. be simulated with programs that adequately model propagation physics of the emitted signal (light in a particular wavelength or sound) inside of the 3D environment. In the case of light signals, the reflectance/diffusion on objects of the emitted light can be modeled through a shader program. An example for sound signals is to use software implementing finite element methods.

In one aspect of the invention, a noise model is set up. The noise model comprises an input and an output and is configured to add noise to any data applied at the input to obtain noisy data and to output the noisy data at the output. The noiseless frames, i.e. depth frames $D_0(i,j)$ and possibly also confidence frames $A_0(i,j)$ are input to the noise model in step 13. The noise model introduces noise to the noiseless dataset to produce a noisy dataset. Advantageously, noise is introduced both in the depth frame $D_0(i,j)$, and in the confidence frame $A_0(i,j)$ to produce a noisy dataset. The noisy dataset may therefore consist of only noisy depth frames $D(i,j)$, or advantageously consist of both noisy depth frames and noisy confidence frames $[D(i,j),A(i,j)]$. As a result, corresponding noiseless and noisy images are easily obtained, allowing the machine learning system to be trained more effectively.

In an advantageous aspect, the noise model implements a non-stationary noise, in particular a spatially non-stationary noise, such as though not limited to a spatially non-stationary bivariate Gaussian noise. Advantageously, the noise model is configured to add the non-stationary noise in a complex plane representation of the noiseless dataset. To this end, the noise model may map the input data to the complex plane.

The noise model may depend on the technology used for depth acquisition. Different depth acquisition devices may be subjected to different kinds of noise, and the noise model may be adapted to the specific case.

Further details will now be described in relation to a ToF camera by way of illustration. Aspects of the invention are however not limited to use with ToF cameras, and some aspects may be easily adapted to the specific technology used.

In general, ToF cameras suffer from various effects when evaluating distance for a given pixel (i, j), including:

(i) Statistical noise: the depth value is affected by a zero-mean random process;
(ii) Flying pixels: signals from background and foreground are mixed, causing intermediate depth values whenever a pixel blends both background and foreground information;
(iii) Systematic errors, due to wrong calibration and assumptions made on the CMOS chip;
(iv) Multipath: secondary signals, due to reflection of the emitted signal.

Statistical modeling of the noise of a ToF camera is a difficult task, as many external parameters affect it. The common model assumed in the denoising literature is a stationary Gaussian noise model, both in conventional, as well as deep learning methods. However, ToF noise cannot be simply modelled as additive Gaussian, because of the non-linear operations performed by the sensor to evaluate the phase offset of the signal coming back to it. Consequently, denoising filters designed for additive Gaussian noise are not optimal for this kind of noise, because of its unique properties.

ToF sensors measure a phase difference (or offset) between an emitted signal and a received signal corresponding to the reflected or scattered part of the emitted signal received by the sensor. Most commonly, the phase difference is determined by cross-correlation between multiple points, or time instants. Assuming the reference (emitted) signal is: $r(t) = \cos(2\pi f t)$ and the received signal is: $(t) = k + B\cos(2\pi f t - \varphi)$, with $f$ the frequency of the modulated signal, $t$ time, and $\varphi$ the phase offset, a cross correlation C can be established as follows:

$$C(\tau) = \int_{-\infty}^{\infty} s(t)r(t+\tau) = \frac{a}{2}\cos(2\pi f \tau + \varphi) + b.$$

In practice, the cross correlation is determined at multiple points:

$$A_k = C(\tau)\big|_{\tau=\frac{k}{Nf}} \quad k = 0, \ldots, N-1,$$

and averaged. In the case of a 4-point method, well-known formulas can be obtained for the average:

$$\begin{cases} \varphi = \text{atan2}(A_3 - A_1, A_0 - A_2) \\ a = \sqrt{(A_0 - A_2)^2 + (A_3 - A_1)^2}/2 \end{cases},$$

in which a is referred to as the confidence or infrared value. The couple $(a,\varphi)$ can be seen to represent a complex number $x = ae^{j\varphi}$ with a the modulus and $\varphi$ the phase in the complex plane.

In practical cases, the ToF sensors may be configured to produce two frames for each image: (1) a depth frame *D(i,j)* comprising information representative of the phase difference $\varphi$ between emitted and received signal, and (2) a confidence or infrared frame *A(i,j)* representative of the amplitude of the received signal and proportional to a. The symbols i and *j* represent the coordinates of a pixel in the frame.

It has been observed that the statistical noise present in the depth frames *D(i,j)* is a *spatially non-stationary process,* which depends on *A(i,j).* Low values of *A(i,j)* will be associated with a higher noise variance on *D(i,j).*

The statistical noise can be modelled in the complex plane as an added value: $x = ae^{j\varphi} + n$, which also would explain the "missing pixel probability", i.e. the noise can bring a below the threshold for pixel detection.

Referring again to Fig. 1, the input data may comprise either only noiseless depth frames $D_0(i,j)$, e.g. if no confidence frames are available, or both $D_0(i,j)$ and confidence frames $A_0(i,j)$ obtained from the noiseless images produced in step 12. The noise model hence advantageously maps $D_0(i,j)$ or the couple $[D_0(i,j),A_0(i,j)]$ to complex numbers of the type $x = ae^{j\varphi}$ and adds noise n to it. The instantiation of the noise n can be obtained through a pseudo-random generator, which can be run several times in order to simulate several independent measurements of the same 3D environment.

The output of the noise model is advantageously a dataset comprising a noisy depth frame *D(i,j),* possibly in combination with a noisy confidence frame *A(j,j),* which will be referred to as the noisy dataset. In one alternative embodiment, both noiseless depth frames $D_0(i,j)$ and noiseless confidence frames $A_0(i,j)$ are input to the noise model, and the noise model is configured to output only a noisy depth frame *D(i,j),* i.e. without a noisy confidence frame.

In step 14, the noisy dataset obtained from the noise model is input to a machine learning system. In addition, the noiseless dataset is also input to the machine learning system. It is possible to input only the noisy and noiseless depth frames *D(i,j)* and $D_0(i,j)$ to the machine learning system for training purposes. It will be advantageous however, that the noisy confidence frame *A(j,j)* be input as well to the machine learning system for added accuracy. In typical cases, there may be no need to input the noiseless confidence frame to the machine learning system since a denoising of the confidence frame is not requested.

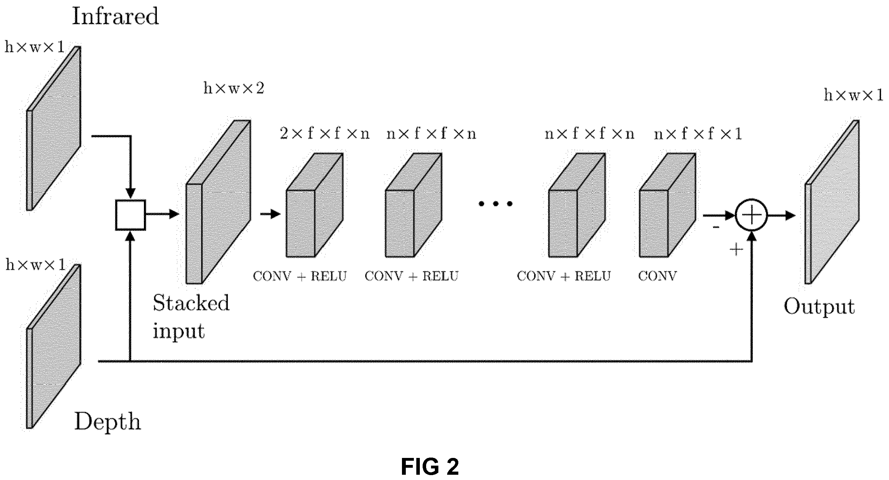

The machine learning system is advantageously a neural network, in particular a convolutional neural network. Referring to Fig. 2, one suitable example of a convolutional neural network (CNN) is composed of only convolution layers, as well as Rectifier Linear Units (ReLU). Advantageously, the CNN uses residual learning. The output of the CNN, which advantageously corresponds to the output of the last convolutional layer, is the noise pattern. Next, the output of the CNN is subtracted from the noisy depth frame, leading to the output of the system, which is the denoised frame.

Advantageously, a first input to the CNN is, for each image (depth frame), a stack comprising the noisy depth frame *D(i,j)* and the noisy infrared frame *A(i,j),* which yields a $h{\times}w{\times}2$ shaped tensor, with h and w being the vertical and horizontal resolution, respectively. Including *A(i,j)* can help in estimating noise intensity.

The machine learning system advantageously features an adaptive behaviour capturing the non-stationary nature of noise in such images, where more noisy regions are correctly identified and processed. As shown in Fig. 2, a suitable CNN consists of d layers, as follows:

- input layer: n convolution filters of size $f{\times}f{\times}2$ followed by a ReLU (Rectifier Linear Unit),
- (*d* - 2) middle layers: n convolution filters of size $f \times f \times n$ followed by a ReLU, and
- output layer: 1 convolution filter of size $f \times f \times n$.

The convolution layers advantageously contain both a convolution and a weighting filter *W(i,j),* and advantageously additionally a bias *b:*

$$W(i,j), \text{ and advantageously additionally a bias } b: f_{conv}(x) = W * x + b \quad (\text{eq. 1}).$$

The ReLU operation is defined as: $f_{ReLU}(x) = max(0, x),$ where the max operation is performed element-wise on the tensor *x*. Thanks to this operation, non-linear filtering can be learned. Otherwise, a CNN made entirely of convolution layers would simply be equivalent to a large linear operation.

Advantageously, max pooling operations which would reduce spatial resolution to reduce redundancies and the number of trainable parameters is not used in order to preserve full spatial resolution throughout the network.

During training, the desired output is a denoised depth frame $D_{out}(i,j),$ which should be as close as possible to the ground truth (noiseless) depth patch $D_0(i,j).$ One suitable loss function used for training is the weighted Mean Square Error, given by:

$$MSE_w = \frac{\sum_{i,j} m(i,j)[D_{out}(i,j) - D_0(i,j)]^2}{\sum_{i,j} m(i,j)},$$

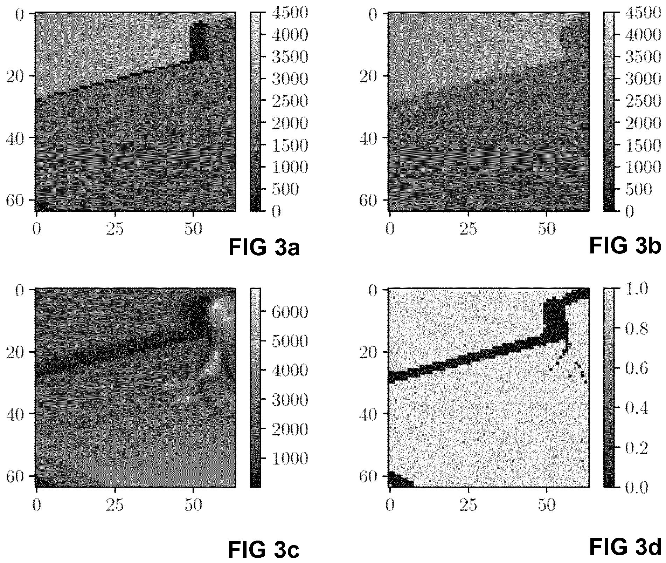

where the mask *m(i,j)* may be set to 0 for missing pixels, as well as for flying pixel regions, because this task may be regarded as an inpainting problem, which can be handled using various techniques, including a specific type of CNN. This advantageously allows for focusing training entirely towards removing noise on relevant parts of the image. A visual example of a mask that was applied to the patches of Fig. 3a-c is shown in Fig. 3d.

The above steps can be carried out for each of the images generated based on the 3D environment, so that a very large number of depth and possibly confidence frames are applied to the machine learning system in step 14. The number of noisy images obtained from step 13 and applied to the machine learning system in step 14 can depend on the resolution of the images. Higher resolution images typically would require a smaller number of images for training the CNN. The number of images is advantageously at least 100, advantageously at least 1000. During the learning process, the CNN will tune its parameters to a near-optimal set of non-linear filters for the specific task or noise removal on depth frames.

Advantageously, a weighted PSNR metric is defined given by:

$$\text{PSNR}\,(D_{out}, D_{gt}) = 10\log\frac{1}{MSE_w(D_{out},D_{gt})}.$$

This PSNR metric may be used for the experimental evaluation of the denoising method according to aspects of the present invention and comparison against other filters. Example

The CNN architecture as sown in Fig. 2 was used and trained. To train the CNN architecture for depth denoising, a Kinect V2 simulator was devised, generating $512 \times 424$ pixels wide frames, as would a real Kinect V2 ToF camera (Microsoft) do. For training, 100000 patches of $64\times64$ pixels are randomly cropped from a set of random scenes. Small patches were used for training with ($h = w = 64$), which does not prevent the CNN to later process full frames of size ($h$, $w$) = (424, 512). In practice, after training, fullsize images may be fed to the CNN: learned filters can be convolved with the whole image, irrespective of whether they were trained on small patches or not.

Each entry in the dataset consisted of:

1) noisy depth image $D_{in}(i, j)$,
2) confidence image $A_{in}(i, j)$,
3) noiseless depth image $Do(i, j)$,
4) mask for relevant pixels $m(i, j)$.

Visual examples of a training dataset entry are shown in Figs. 3a-c. Every coefficient of a given W in eq. 1 is initialized based on a random normal law of standard deviation $\sigma = 0.05$, and the bias $b$ is initially set to 0. In the tested configuration, $f = 3$, $n = 64$ and $d = 10$.

Batches of 128 simultaneous $64\times64$ patches were used during training. The Tensorflow library (https://www.tensorflow.org/) is used, on an NVIDIA Quadro M5000 GPU. Each batch took 0.6 seconds to process.

Training could be significantly speeded up by normalizing $Din(i, j)$ and $A_{in}(i, j)$ by subtracting their mean and applying a division by their standard deviation. This was done individually for the depth and infrared channels, and their statistical properties were measured on the 100000 patches present in the dataset. In case normalization is skipped, the scale of depth and infrared values would be incompatible, and the CNN may likely not use the infrared component as useful side-information.

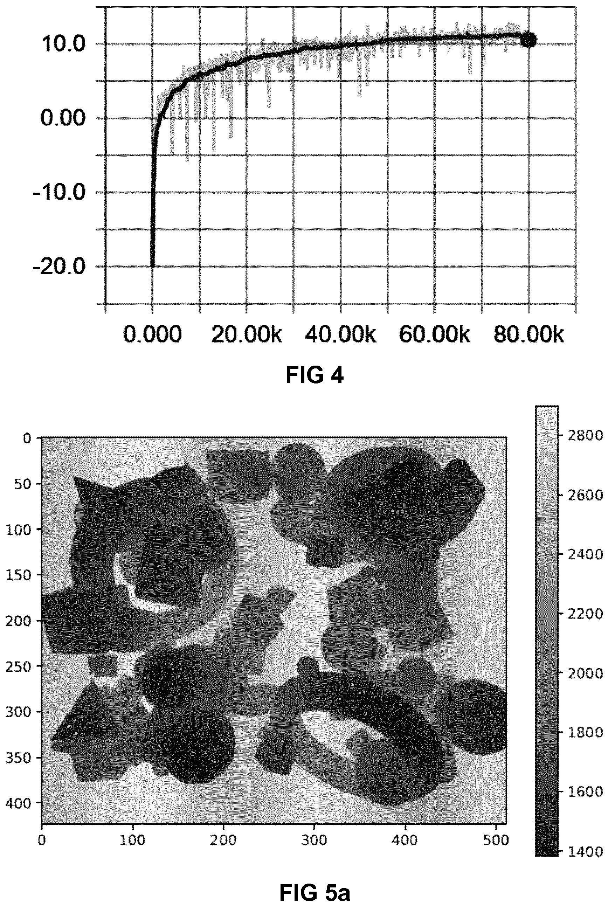

Fig. 4 depicts the improvement of the PSNR defined as:

$$\Delta PSNR_w = PSNR_w(D_{out},D_0) - PSNR_w(D_{in},D_0).$$

This value is only positive when $D_{out}$ has a reduced amount of noise when compared to $D_{in}$. After about 20 minutes of training, a state where $\Delta PSNR_w > 0$ was reached. About 12 hours were needed to converge towards satisfying results.

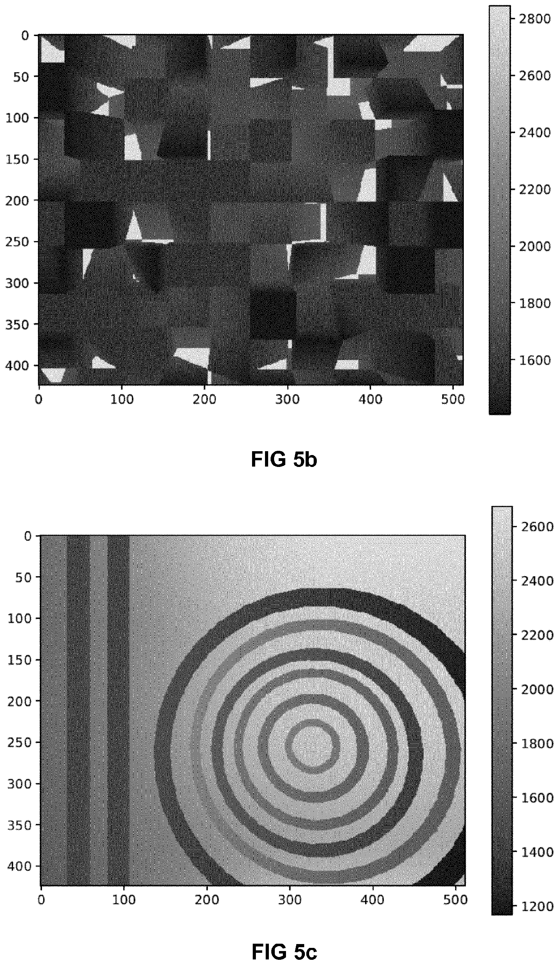

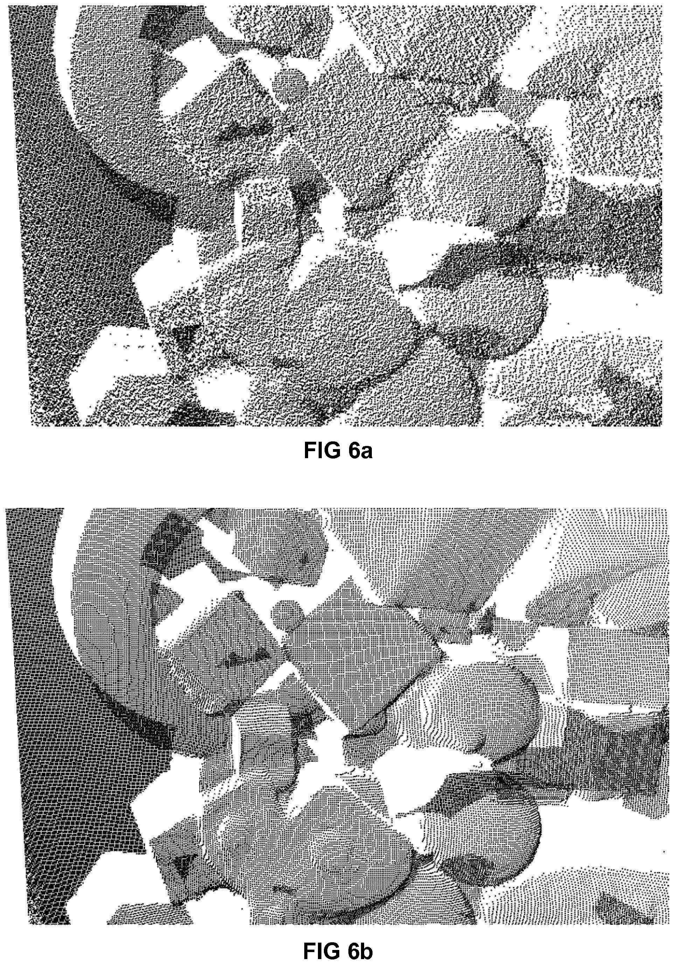

To ensure that the CNN had learned useful filters, its quality on validation scenes, not part of the training dataset was assessed. Example validation scenes are shown in Fig. 5a-c. The denoising performance achieved was checked visually on the validation scenes by reprojecting the depth as a point cloud. For the validation scene of Fig. 5a, the denoising performance is shown in Figs. 6a-b.

**Claims**

1. Method of reducing noise in a depth image, comprising:

    providing a noise model introducing noise to an input,
    representing (11) at least one three-dimensional (3D) environment with a computer graphics simulator and producing (12) a first dataset of noiseless depth images from the represented at least one 3D environment,
    applying (13) the first dataset as input to the noise model and the noise model producing a second dataset of noisy depth images from the first dataset,
    applying (14) the first dataset and the second dataset to a first machine learning system to adapt one or more filters of the first machine learning system.

2. Method of claim 1, further comprising taking a first depth image with a depth acquisition device and applying the first depth image to a second machine learning system implementing the one or more filters adapted by the first machine learning system, wherein the second machine learning system outputs a second depth image with reduced noise.

3. Method of claim 1 or 2, wherein the first dataset comprises at least 100 noiseless depth images.

4. Method of any one of the preceding claims, wherein the first dataset comprises for each noiseless depth image, a depth buffer comprising depth information and a confidence buffer comprising secondary information related to the depth information.

5. Method of claim 4, wherein the depth acquisition device is a time-of-flight camera, wherein the depth buffer comprises information indicative of a phase of a signal received by the depth acquisition device and wherein the confidence buffer comprises information indicative of an amplitude of the signal.

6. Method of claim 4 or 5, wherein the step of applying the first dataset to the first machine learning system comprises applying the depth buffer without the confidence buffer to the first machine learning system.

7. Method of any one of the preceding claims, wherein the machine learning system is a deep learning system.

8. Method of any one of the preceding claims, wherein the machine learning system is a convolutional neural network comprising a sequence of layers, each layer comprising one or more convolution filters followed by a nonlinear filter.

9. Method of claim 8, wherein at least one of the one or more convolution filters implements a convolution with a weighting filter and a bias.

10. Method of claim 8 or 9, wherein the nonlinear filter is a Rectifier Linear Unit.

11. Method of any one of the preceding claims, wherein the noise model introduces a non-stationary noise to the input.

12. Method of claim 11, wherein the non-stationary noise is a spatially non-stationary bivariate Gaussian noise.

13. Method of claim 12, wherein the first dataset comprises for each noiseless depth image, a depth buffer comprising information indicative of a phase of a depth signal and a confidence buffer comprising information indicative of an amplitude of the depth signal, wherein the noise model maps the first dataset to a complex plane, wherein a value of the depth buffer and a corresponding value of the confidence buffer are mapped to a single complex number, wherein the non-stationary noise is added to the complex number to obtain a noisy complex number, wherein a phase of the noisy complex number is representative of a depth value of the second dataset and wherein a modulus of the noisy complex number is representative of a confidence value of the second dataset.

14. Depth acquisition device for acquiring depth images, comprising a processing unit implemented with the second machine learning system comprising the filter and the adapted filter parameters as in any one of the preceding claims.

15. Device of claim 14, being a time-of-flight camera.

EP 3 480 782 A1

```
11 ──╮      ┌──────────────────────┐
      ╰──────┤   Create CG scene     │
             └──────────┬───────────┘
                        │
                        ▼
12 ──╮      ┌──────────────────────┐
      ╰──────┤  Produce D₀(i,j), A₀(i,j) │
             └──────────┬───────────┘
                        │
                        ▼
13 ──╮      ┌──────────────────────┐
      ╰──────┤ Noise model D(i,j), A(i,j) │
             └──────────┬───────────┘
                        │
                        ▼
14 ──╮      ┌──────────┐
      ╰──────┤   CNN     │◄──────
             └──────────┘
```

**FIG 1**

FIG 2

FIG 3a

FIG 3b

FIG 3c

FIG 3d

**FIG 4**

**FIG 5a**

**FIG 5b**

**FIG 5c**

**FIG 6a**

**FIG 6b**

Europäisches
Patentamt

European
Patent Office

Office européen
des brevets

# EUROPEAN SEARCH REPORT

Application Number

EP 17 19 9625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GERNOT RIEGLER ET AL: "A Deep Primal-Dual Network for Guided Depth Super-Resolution", ARXIV.ORG, CORNELL UNIVERSITY LIBRARY, 201 OLIN LIBRARY CORNELL UNIVERSITY ITHACA, NY 14853, 28 July 2016 (2016-07-28), XP080717351, * abstract * * page 9, last paragraph * * page 7, last paragraph * * page 8, lines 6-7 * * figure 1 * | 1 | INV. G06T5/00 G06K9/62 |
| X | US 9 760 837 B1 (MICROSOFT TECHNOLOGY LICENSING LLC [US]) 12 September 2017 (2017-09-12) * column 2, lines 60-61 * * column 10, lines 14-18 * * column 8, lines 29-31,64-67 * * column 3, lines 5-7 * * column 7, lines 23-26 * * column 3, lines 36-38 * * column 4, lines 3-8 * * column 3, lines 50-55 * * column 4, lines 13-14 * * column 13, lines 40-55 * * figure 2 * | 1-15 | |

-----

-/--

|  | TECHNICAL FIELDS SEARCHED (IPC) |
|---|---|
|  | G06T G06K |

The present search report has been drawn up for all claims

| Place of search | Date of completion of the search | Examiner |
|---|---|---|
| Munich | 28 February 2018 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EDELER T ET AL: "Time-of-flight depth image denoising using prior noise information", SIGNAL PROCESSING (ICSP), 2010 IEEE 10TH INTERNATIONAL CONFERENCE ON, IEEE, PISCATAWAY, NJ, USA, 24 October 2010 (2010-10-24), pages 119-122, XP031817493, ISBN: 978-1-4244-5897-4 * page 119, right-hand column, line 6 - page 120, left-hand column, line 19 * | 11-13 | |
| A | IVANA TOSIC ET AL: "Learning sparse representations of depth", ARXIV.ORG, CORNELL UNIVERSITY LIBRARY, 201 OLIN LIBRARY CORNELL UNIVERSITY ITHACA, NY 14853, 30 November 2010 (2010-11-30), XP080465630, DOI: 10.1109/JSTSP.2011.2158063 * page 2, left-hand column, line 40 - line 44 * | 11-13 | |

TECHNICAL FIELDS
SEARCHED (IPC)

The present search report has been drawn up for all claims

| Place of search | Date of completion of the search | Examiner |
|---|---|---|
| Munich | 28 February 2018 | Winkler, Gregor |

EPO FORM 1503 03.82 (P04C01)

## ANNEX TO THE EUROPEAN SEARCH REPORT
## ON EUROPEAN PATENT APPLICATION NO.

EP 17 19 9625

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2018

| Patent document cited in search report | Publication date | Patent family member(s) | Publication date |
|---|---|---|---|
| US 9760837 B1 | 12-09-2017 | US 9760837 B1<br>WO 2017160516 A1 | 12-09-2017<br>21-09-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160321523 A